**Europäisches Patentamt**

**European Patent Office**

**Office européen des brevets**

(19)

(11) Veröffentlichungsnummer: **0 025 984**
**B1**

(12)

# EUROPÄISCHE PATENTSCHRIFT

(45) Veröffentlichungstag der Patentschrift:
16.03.83

(51) Int. Cl.³: **F 24 J 3/00,** C 09 K 5/00

(21) Anmeldenummer: **80105603.7**

(22) Anmeldetag: **18.09.80**

(54) **Verfahren zur Beschickung von Latentwärmespeichern.**

(30) Priorität: **20.09.79 DE 2937959**

(43) Veröffentlichungstag der Anmeldung:
**01.04.81 Patentblatt 81/13**

(45) Bekanntmachung des Hinweises auf die Patenterteilung:
**16.03.83 Patentblatt 83/11**

(84) Benannte Vertragsstaaten:
**AT BE CH DE FR GB IT LI LU NL SE**

(56) Entgegenhaltungen:
**AU-B-3 179 567**
**DE-A-2 207 338**
**DE-A-2 639 173**

(73) Patentinhaber: **Benckiser-Knapsack GmbH, Dr.**
**Albert-Reimann-Strasse 2, D-6802 Ladenburg (DE)**

(72) Erfinder: **Wasel-Nielen, Joachim, Dr. Dipl.-chem.,**
**Luisenstrasse 7, D-6945 Hirschberg (DE)**
Erfinder: **Merkenich, Karl, Dr. Dipl.-chem.,**
**Gunterstrasse 7, D-6149 Rimbach (DE)**
Erfinder: **Gehrig, Oskar, Dr. Dipl.-chem., verstorben (DE)**
Erfinder: **Sommer, Klaus, Dr. Dipl.-chem.,**
**Greifstrasse 28, D-6900 Heidelberg 1 (DE)**

(74) Vertreter: **Patentanwälte Zellentin,**
**Zweibrückenstrasse 15, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Beschickung von Latentwärmespeichern

Gegenstand der vorliegenden Erfindung ist ein Verfahren zur Beschickung von Latentwärmespeichern mit Salzhydraten.

Bei der Nutzung von Wärmeenergie kommt der Speicherung — der Station zwischen dem Angebot bzw. der Erzeugung von Energie und dem Bedarf bzw. Verbrauch — eine hohe Bedeutung zu. Dies gilt in verstärktem Masse bei der Nutzung von Niedertemperaturwärme, die z.B. aus der Solarenergie oder der Umweltwärme gewonnen werden kann. Es ist offensichtlich, dass gerade in diesen Fällen eine Diskrepanz zwischen Energieangebot und -bedarf besteht.

Die Vorteile, die sich bei der Ausnutzung latenter Wärmen, z.B. Schmelzwärmen im Gegensatz zur Speicherung mit herkömmlichen Wasser- oder Füllkörperspeichern ergeben, sind insbesondere für die Anwendung in Niedertemperaturwärmesystemen in den letzten Jahren relativ breit diskutiert worden und führten zur Konzeption der Latentwärmespeicher. Als Speichermedien werden hier hauptsächlich Salzhydrate mit geeigneten Schmelzpunkten vorgeschlagen und untersucht, siehe z.B. „VDI-Berichte", 288, 79 (1977).

Als Speicher sind verschiedene Systeme denkbar und in der Literatur erwähnt. Einerseits kann es sich um durch Wärmetauscher begrenzte, zur Vermeidung von Wärmetransportstörungen möglichst flache Behälter handeln. Zur Eliminierung von Stratifikationseffekten, die zur Ausfällung niederer Hydrate führen können, wurde die lamellenförmige Unterteilung der Behälter oder die Verpackung in flache Beutel, wie aus der DE-A Nr. 2223882 hervorgeht, vorgeschlagen.

Bekannt ist weiterhin die Ummantelung mit Kunststoffen gemäss DE-A Nr. 2741829. Auch das Einfüllen des Speichermediums in Kunststoffkugeln oder ähnliche Behälter, wie sie für die Kühlung von Getränken verwendet werden, ist denkbar. In diesen Fällen ist eine auch in der dritten Dimension voluminösere Konzipierung der Speichertanks möglich, da hier andere Flüssigkeiten (z.B. Öl, Wasser) den Wärmetransport übernehmen. Des weiteren wird eine ständige Durchmischung des Speichermediums im flüssigen Zustand mittels durch die Schmelze perlender, mit dieser nicht mischbarer Wärmeträgerflüssigkeit in „Tagung der Deutsche Gesellschaft für Sonnenenergie", Tagungsband III, 1977, S. 80, beschrieben.

In den DE-A Nrn. 2658720 und 2720188 werden zum Ausgleich der bei den Phasenwechseln auftretenden Volumenänderungen Behälter mit flexiblen Wänden oder expandierende Wärmetransportflüssigkeiten vorgeschlagen.

Bisher wurden zur Beschickung der Speicher aufgeschmolzene Salzhydrate eingesetzt. Dieses Verfahren ist aus mehreren Gründen ungünstig:

Bei dem Aufschmelzen kristalliner pulvriger Feststoffe hat man sehr hohe Wärmetransportwiderstände auch durch eingelagerte Luft zu überwinden. Diese Verhältnisse werden durch Sinter-oder Teilschmelzvorgänge, verbunden mit Volumenänderungen, noch verschärft.

Auch beim Aufschmelzen von kompakteren Salzhydraten in grösseren Behältern vollzieht sich der Wärmeübergang nur äusserst langsam.

Stark hydrathaltige Salze, z.B. Glaubersalz oder Dinatriumphosphatdodekahydrat neigen bei der Lagerung unter Umständen sehr stark zu Verwitterungen. Dies führt einerseits zu relativ kompliziert zu erfassenden und entsprechend auszugleichenden Wasserverlusten sowie andererseits zu einem so hartnäckigen Zusammensintern des Salzes, dass oft eine mechanische Zerkleinerung vor dem Füllen des Speichers bzw. des Aufschmelzbehälters unumgänglich ist.

Hydratwasserhaltige Salze, z.B. Dinatriumphosphatdodekahydrat, wie z.B. aus der DE-A Nr. 2639173 bekannt, sind produktionstechnisch aufgrund der hier ungünstigen thermodynamischen Daten und der relativ niedrigen Schmelzpunkte oft schwieriger herstellbar als niedrigere Hydrate, wie z.B. Dinatriumphosphatdihydrat. Dies schlägt sich natürlich auch in den Herstellungskosten nieder.

Die stark unterschliedlichen Volumina handelsüblicher Salze und der resultierenden Schmelzen machen ein mehrmaliges Nachfüllen der Schmelz- bzw. Speicherbehälter oder eine sehr grosszügige Konzipierung der Aufschmelzbehälter notwendig.

Beim Aufschmelzen bilden sich relativ grosse Temperaturdifferenzen zwischen den inhomogenen Bezirken aus, die leicht zu Stratifikationseffekten und in der Folge zur Ausfällung niederer Hydrate führen. Dies macht eine Homogenisierung der Schmelze durch intensives Rühren nach dem Aufschmelzen erforderlich. Das Ende des Aufschmelzvorganges ist nur schlecht feststellbar.

Es ist unwirtschaftlich, ein Salzhydrat unter grossem energetischem Aufwand aufzuschmelzen. Auch das Auflösen niederer Hydrate oder wasserfreier Salze (US-A Nr. 2677367) in Wasser erfordert Zufuhr von Wärme, um die Phasenumwandlungstemperatur zu erreichen.

Es wurde nun gefunden, dass man die geschilderten Nachteile vermeidet und wesentlich vorteilhafter zu Latentwärmespeichern gelangt, wenn man in die Speicher am gewünschten Phasenumwandlungspunkt gesättigte Lösungen einfüllt, die man durch Neutralisationsreaktionen und der gegebenenfalls erforderlichen Menge Wasser gewinnt, wobei mindestens eine Komponente flüssig ist.

*Herstellung von gesättigten Lösungen:*
*I. Neutralisation von Säuren und Laugen:*
Eine Möglichkeit zur Herstellung einer solchen gesättigten Lösung, die als Latentwärmespeicher verwendet werden soll, besteht in der Neutralisation von z.B. Phosphorsäure bzw. Schwefelsäure und Natronlauge. Die Konzentration der Säure und Lauge muss so gewählt sein, dass so viel Wasser vorhanden ist, um die gewünschte Hydratstufe zu erreichen. Dies wird dadurch erzielt, dass man konzentrierte Säure und Lauge verwendet und die entsprechende Menge Wasser vorlegt. Man kann aber auch von entsprechend verdünnteren Säuren und Laugen ausgehen. Rein schematisch lässt sich dieser Vorgang durch folgende Reaktionsgleichungen verdeutlichen:

a) $H_3PO_4 + 2\,NaOH + 10\,H_2O \rightarrow Na_2HPO_4 \cdot 12\,H_2O$
b) $H_2SO_4 + 2\,NaOH + 8\,H_2O \rightarrow Na_2SO_4 \cdot 10\,H_2O$

In diesen Fällen wird bei der Verwendung konzentrierter, insbesondere starker Laugen und Säuren sowohl Verdünnungs- als auch die beträchtliche Neutralisationswärme frei.

Die hierbei freiwerdende Wärmemenge kann höher sein als die Temperatur, die notwendig ist, um zu der gesättigten Lösung zu gelangen, so dass unter Umständen zur Gewährleistung eines raschen Reaktionsablaufs eine Kühlung vorzusehen ist. Die so abgeführte Wärme kann anderweitig genutzt werden, z.B. zur thermischen Beladung entladener Speicher oder in Kombination mit den nachfolgend beschriebenen Varianten.

*II. Neutralisation basischer oder saurer Salze:*
Zur Herstellung gesättigter Lösungen von Dinatriumphosphatdodekahydrat kann von folgenden Reaktionen ausgegangen werden:

a) $2\,Na_3PO_4 + H_3PO_4 + 36\,H_2O \rightarrow$
   $3\,Na_2HPO_4 \cdot 12\,H_2O$
b) $NaH_2PO_4 + NaOH + 11\,H_2O \rightarrow$
   $Na_2HPO_4 \cdot 12\,H_2O$

Durch die Verwendung entsprechend verdünnter Laugen bzw. Säuren sowie durch die geschickte Ausnutzung der Neutralisations- und Verdünnungswärme gelingt es, die gesättigte Lösung des gewünschten Salzhydrates ohne zusätzliche Heizung oder Kühlung herzustellen. Es sind lediglich relativ exakte Dosiervorrichtungen und ein Rühraggregat erforderlich. Dasselbe gilt auch für die nachstehenden Beispiele:

c) $KH_2PO_4 + 2\,KOH + 5\,H_2O \rightarrow K_3PO_4 \cdot 7\,H_2O$
d) $NaHSO_4 + NaOH + 9\,H_2O \rightarrow Na_2SO_4 \cdot 10\,H_2O$

Die Vielfalt der Möglichkeiten hängt auch von der Art des gewünschten Salzhydrats und der korrespondierenden Säure ab.

So ist im Falle von Trikaliumphosphatheptahydrat nur eine Neutralisation mit Basen möglich, wobei als Ausgangsstoffe das Monokaliumdihydrogenphosphat und das Dikaliumhydrogenphosphat bzw. entsprechende Hydrate möglich sind.

Zur Herstellung von Salzen zweiwertiger Säuren, z.B. der Schwefelsäure, wird die Wahl der Möglichkeiten eingeschränkt. Es ist nur eine Neutralisationsreaktion mit entweder einer Lauge oder einer Säure möglich.

Zur Herstellung von gesättigten Lösungen solcher Hydrate, deren Säuren einwertig sind, wie Kaliumfluoridtetrahydrat, kommt als Ausgangsstoff ein mehr oder minder neutralisiertes Salz der gleichen Säure nicht in Frage. Als Ausgangsprodukte sind hier Oxide oder Carbonate nach folgendem Reaktionsschema einsetzbar:

e) $K_2CO_3 + 2\,HF + 7\,H_2O \rightarrow 2\,KF \cdot 4\,H_2O + CO_2$
f) $CaO + 2\,HCl + 5\,H_2O \rightarrow CaCl_2 \cdot 6\,H_2O$

Es ist selbstverständlich, dass nach diesem Prinzip auch gesättigte Lösungen von Salzen mehrwertiger Säuren gewonnen werden können.

Für den erfindungsgemässen Zweck sind nur gesättigte Lösungen solcher Salze verwendbar, deren Phasenumwandlungspunkt grösser ist als die Wärmekapazität von Wasser bei der entsprechenden Temperatur und die mindestens drei Kristallwasser mehr enthalten als das nächst niedrigere Hydrat bzw. wasserfreie Salz.

Bei der Herstellung solcher gesättigten Lösungen, die sich als Latentwärmespeichermedien eignen und die durch Vorlage einer flüssigen Phase (Wasser, Säure, Lauge oder Lösung) und bei der Ausnutzung der Verdünnungs- und/oder Neutralisationswärme gewonnen werden, lassen sich nicht nur die vorstehend genannten Nachteile, die sich beim Aufschmelzen der handelsüblichen festen Salzhydrate ergeben, vermeiden, sondern es werden auch noch folgende Vorteile erzielt:

Die Herstellung lässt sich viel rascher durchführen und erfordert geringere Energieaufwendungen, da z.B. Wärmetransportstörungen vermieden werden.

Exakt definierte Ansätze und Produkte sind bequem herstellbar.

Die Verwendung industriell schwierig kristallin darzustellender und dadurch bedingt relativ teurer Salzhydrate wird umgangen.

Die automatische Regelung der Prozesse ist leicht möglich.

Die Homogenität ist in jedem Moment durch Rühren gewährleistet. Lange andauerndes Nachhomogenisieren durch Auflösen niederer Hydrate entfällt damit.

Additive, wie Kristallisationsbeschleuniger, Korrosionsinhibitoren, Überschusswasser zum Ausgleich von Wasserverlusten usw. sind bequem einzubringen.

Durch den Einsatz von leicht zugänglichen Ausgangsmaterialien, wie Säuren und Laugen oder Carbonaten, sind völlig neue wirtschaftliche Aspekte gegenüber der bisherigen Verwendung von Salzhydraten gegeben.

Welcher der oben angeführten Wege bei der Beschickung von Latentwärmespeichern am günstigsten ist, hängt von der gewählten gesättigten Lösung und von den jeweils gegebenen Verhältnissen im Herstellerwerk des Speichers ab.

Die Variante II erfordert keine leistungsfähigen Kühl- oder Heizanlagen. Es braucht entweder nur Säure oder Lauge verwendet zu werden.

Gemäss Variante I geht man von den wirtschaftlich günstigsten Ausgangsstoffen aus. Ausserdem lässt sich dieses Verfahren unter Energiegewinn durchführen. Allerdings ist als Lösevorrichtung ein etwas aufwendigerer, möglichst automatisch steuerbarer Reaktor und dessen qualifizierte Bedienung sinnvoll.

Die Herstellung der gesättigten Lösungen ist nicht an den Standort des Speichers gebunden. Es wird sogar in vielen Fällen günstig sein, die Lösung in bereits vorhandenen Anlagen mit der Problematik vertrauter Betriebe herzustellen und die fertige Lösung in geeigneten Behältern oder Kesselwagen zum Ort der Füllung zu transportieren. So ist z.B. die Herstellung einer gesättigten Dinatriumphosphatlösung in den Kristallisationsanlagen von Phosphatherstellern leicht zu handhaben. Der Transport von 60-70° C warmen Lösungen ist unproblematisch.

Das Wesen der vorliegenden Erfindung liegt also in der Verwendung der am gewünschten Umwandlungspunkt gesättigten Lösungen zur Beschickung von Latentwärmespeichern unter Nutzbarmachung der genannten Vorteile gegenüber den bisher bekannten Verfahren des Aufschmelzens bzw. Lösens handelsüblicher Salze.

Es ist auch ohne weiteres möglich, die gesättigten Lösungen auf poröses oder mikroporöses Trägermaterial aufzubringen, das zur Bildung einer Matrix, eines Kornbettes usw. verwendet werden kann, um das Wärmespeichermedium zu fixieren bzw. den Wärmeübergang Speichermaterial/Transportmedium zu verbessern. Des weiteren ist es auch möglich, die gesättigten Lösungen in Wärmebatterien oder Wärmepuffern einzusetzen, wobei dasselbe Prinzip zur Anwendung kommt.

*Beispiel 1* (Vergleichsbeispiel)

*Ansatz: 5 kg handelsübliches Dinatriumphosphatdodekahydrat (P$_2$O$_5$-Gehalt: ca. 20%), 25 g Wasser*

Das Phosphat wurde in einer geschlossenen Polyäthylenflasche in einem Trockenschrank aufgeschmolzen, nachdem zuvor zum Ausgleich des Verwitterungswassers 0,5% Wasser zugegeben war. Der Schmelzvorgang dauerte bei 60° C über 48 h. In dem verwendeten Gefäss verringerte sich das ursprüngliche Schüttvolumen um mehr als die Hälfte (Schmelzvolumen).

Es resultierte oberhalb der Schmelztemperatur eine klare Lösung über ca. 10% ausgefälltem Dinatriumphosphatheptahydrat und -dihydrat. Erst intensives und längeres Rühren führte zur Auflösung der Niederschläge und der Homogenisierung der Schmelze.

*Beispiel 2* (Variante I, a)

*Ansatz:*
*2230 g 50%ige Natronlauge*
*1650 g 83%ige Phosphorsäure*
*1120 g Wasser, entsprechend*

*5 kg Dinatriumphosphatdodekahydrat*

In einem geschlossenen 5-l-Polyäthylengefäss, das mit einem Tropftrichter, einem Rührer und einem Thermometer ausgestattet war, wurde das Wasser vorgelegt und die Phosphorsäure zugegeben. Die Temperatur stieg auf ca. 45° C. Die Zugabegeschwindigkeit der 50%igen Natronlauge wurde mittels des Tropftrichters so geregelt, dass eine Temperatur von 85° C nicht überschritten wurde. Bei gleichzeitiger intensiver Wasseraussenkühlung war so eine Präparationszeit von etwa ½ h nötig.

Es resultierte eine vollständig homogene, klare Dinatriumphosphatlösung, deren Überführung in einen Versuchsspeicher nach Abkühlung auf ca. 50° C bequem möglich war.

*Beispiel 3* (Variante II, a, e)

*Ansatz:*
*1605 g handelsübliches Trinatriumphosphathalbhydrat (P$_2$O$_5$-Gehalt ca. 40%, produktionsbedingt 3% Na$_2$CO$_3$ enthaltend)*
*585 g 83%ige Phosphorsäure*
*2830 g Wasser, entsprechend*

*5 kg Dinatriumphosphatdodekahydrat*

In einem mit einem Magnetrührer ausgerüsteten 5-l-Becherglas wurde das Wasser vorgelegt und die Phosphorsäure zugegeben. Die Verdünnungswärme führte zur Temperaturerhöhung von ca. 2° C. Die recht zügige Zugabe des Trinatriumphosphats erhöhte die Temperatur der Reaktionslösung auf ca. 60° C. Diese Temperatur wurde während der Präparation in dem verwendeten Reaktionsgefäss, das weder geheizt noch gekühlt wurde, nicht wesentlich über- und unterschritten. Die CO$_2$-Entwicklung war nicht störend und führte zu einem zusätzlichen Mischeffekt. Die vollständige Reaktion war etwa nach ¼ h abgeschlossen. Es resultierte eine klare, homogene Dinatriumphosphatlösung, die problemlos in Versuchsspeicher gefüllt werden konnte.

*Beispiel 4* (Variante II, b)

*Ansatz:*
*1675 g handelsübliches Mononatriumdihydrogenphosphat, wasserfrei*
*1120 g 50%ige Natronlauge*
*2205 g Wasser, entsprechend*

*5 kg Dinatriumphosphatdodekahydrat*

In einem mit einem Magnetrührer ausgerüsteten 5-l-Becherglas wurde Wasser vorgelegt und die 50%ige Natronlauge zugegeben. Die Temperatur der Lösung stieg dabei von 25 auf ca. 50° C. In relativ zügigem Tempo wurde das Mononatriumphosphatpulver eingebracht, wobei darauf geachtet wurde, dass die Temperatur 70° C nicht überstieg. Nach ca. ½ h wurde eine vollständig klare Lösung erhalten.

Die in die Versuchsspeicher gefüllten Lösungen, gewonnen nach den Beispielen 2 bis 4, erstarrten unterhalb 35° C unter Abgabe der latenten Wärme. Das Aufschmelzen führt zu rückstandslosen Flüssigkeiten.

**Patentansprüche**

1. Verfahren zur Beschickung von Latentwärmespeichern mit Salzhydraten, deren Phasenumwandlungswärme grösser ist als die Wärmekapazität des Wassers bei entsprechender Temperatur, dadurch gekennzeichnet, dass man in die Speicher eine am gewünschten Phasenumwandlungspunkt gesättigte Lösung einfüllt, die man durch Neutralisationsreaktionen und der gegebenenfalls erforderlichen Menge Wasser gewinnt, wobei mindestens eine Komponente flüssig ist.

2. Verfahren nach Anspruch 1, dadurch gekennzeichnet, dass als saure Komponente Säuren und/oder saure Salze mit Basen und als basische Komponente Laugen und/oder basische Salze mit Säuren umgesetzt werden.

3. Verfahren nach Anspruch 2, dadurch gekennzeichnet, dass als basische Komponente Carbonate, Oxide oder Hydroxide eingesetzt werden.

4. Verfahren nach den Ansprüchen 1 bis 3, dadurch gekennzeichnet, dass man Lösungen einsetzt, die mit Zusätzen, wie Kristallisationsbeschleunigern, Korrosionsinhibitoren und/oder Stratifikationshemmern, versetzt sind.

5. Verfahren nach den Ansprüchen 1 bis 4, dadurch gekennzeichnet, dass man Lösungen mit leichtem Wasserüberschuss herstellt und einfüllt.

## Revendications

1. Procédé pour garnir des accumulateurs à chaleur latente avec des hydrates de sels, dont la chaleur latente de changement de phase est plus grande que la capacité calorifique de l'eau et à la température correspondante, procédé caractérisé en ce que l'on verse dans les accumulateurs une solution, saturée à la température de changement de phase désirée, que l'on obtient par des réactions de neutralisation et avec addition de la quantité d'eau éventuellement nécessaire, au moins une des composantes étant liquide.

2. Procédé selon la revendication 1, caractérisé en ce que l'on fait réagir, comme composantes acides, des acides et/ou des sels acides avec des bases, et, comme composantes basiques, des lessives alcalines et/ou des sels basiques avec des acides.

3. Procédé selon la revendication 2, caractérisé en ce que l'on utilise, comme composantes basiques, des carbonates, des oxydes ou des hydroxydes.

4. Procédé selon l'une quelconque des revendications 1 à 3, caractérisé en ce que l'on utilise des solutions auxquelles se trouvent mélangés des additifs tels que des accélérateurs de cristallisation, des inhibiteurs de corrosion et/ou des inhibiteurs de stratification.

5. Procédé selon l'une quelconque des revendications 1 à 4, caractérisé en ce que l'on prépare et introduit dans l'accumulateur des solutions avec un léger excès d'eau.

## Claims

1. A method of charging latent heat accumulators with salt hydrates, having a phase conversion heat greater than the thermal capacity of water at a corresponding temperature, characterized in that a solution, which is a satured solution at the desired phase conversion point, is poured into the accumulator, the solution being obtained by neutralization reactions, if necessary with the required quantity of water, so that at least one constituent thereof is fluid.

2. A method according to claim 1, characterized in that acids and/or acidic salts, as acidic constituents, are reacted with bases, and lyes and/or basic salts, as basic constituents, are reacted with acids.

3. A method according to claim 2, characterized in that carbonates, oxides or hydroxides are used as basic constituents.

4. A method according to claims 1 to 3, characterized in that solutions are used which are mixed with additives such as crystallization accelerators, corrosion inhibitors and/or stratification retarders.

5. A method according to claims 1 to 4, characterized in that solutions with a slight excess of water are produced and poured into the accumulators.